Europäisches Patentamt

(19) European Patent Office

Office européen des brevets

(11) Numéro de publication: **0 117 248**
**A1**

(12) ## DEMANDE DE BREVET EUROPEEN

(21) Numéro de dépôt: **84870008.4**

(22) Date de dépôt: **13.01.84**

(51) Int. Cl.³: **B 24 B 27/00**
**B 23 K 7/06, B 23 P 9/00**
**B 21 B 45/00, B 21 C 43/00**

---

(30) Priorité: **20.01.83 BE 6047767**

(43) Date de publication de la demande:
**29.08.84 Bulletin 84/35**

(84) Etats contractants désignés:
**IT**

(71) Demandeur: **CENTRE DE RECHERCHES
METALLURGIQUES CENTRUM VOOR RESEARCH IN DE
METALLURGIE Association sans but lucratif
Vereniging zonder winstoogmerk Rue Montoyer, 47
B-1040 Bruxelles(BE)**

(72) Inventeur: **Pirlet, Robert
32, Avenue des Lauriers
B-4920 Embourg(BE)**

(74) Mandataire: **Lacasse, Lucien Emile
CENTRE DE RECHERCHES METALLURGIQUES Abbaye
du Val-Benoît 11, rue Ernest Solvay
B-4000 Liège(BE)**

---

(54) **Perfectionnements aux procédés de conditionnement des produits métalliques.**

(57) On détecte les défauts superficiels et/ou sous-cutanés de préférence dans toute la surface à conditionner. On élimine les défauts par écriquage au chalumeau et/ou meulage, puis on inspecte et on nettoie la surface traitée. On manoeuvre les appareils de détection, d'élimination, d'inspection et de nettoyage au moyen de robots ou d'automates programmables placés sous la commande d'un calculateur.

Le procédé peut s'appliquer en ligne à des produits chauds en mouvement (laminoir, coulée continue).

EP 0 117 248 A1

<u>Perfectionnements aux procédés de conditionnement des produits</u>
<u>métalliques</u>.

La présente invention concerne un procédé perfectionné de conduite de l'opération de conditionnement de produits métalliques.
Il s'applique en particulier au conditionnement à chaud de produits obtenus par laminage ou par coulée continue, tels que des
brames en acier.

On sait que sous le vocable de "conditionnement" des produits
métalliques, sont généralement regroupées diverses opérations
comportant usuellement l'examen des produits pour en détecter
les défauts, l'élimination des défauts détectés, le contrôle de
cette élimination et le nettoyage final éventuel du produit.

Le conditionnement visé par la présente invention concerne les
défauts superficiels et les défauts sous-cutanés, c'est-à-dire
les défauts situés à une profondeur n'excédant pas 10 mm à partir de la surface du produit.

Dans la description qui suit, il est fait référence plus particulièrement à des brames d'acier obtenues par coulée continue.
Il va de soi cependant que cette description n'a aucun caractère limitatif et que la méthode de l'invention peut également
s'appliquer à de nombreux autres produits métalliques.

Les fabricants d'acier ont toujours cherché à réaliser des produits présentant un nombre de défauts aussi faible que possible,
afin de ne pas compromettre la qualité des produits finis. A l'
heure actuelle, il n'est cependant pas encore possible de produire des brames absolument exemptes de défauts. Il est dès lors
nécessaire de détecter et d'éliminer les défauts susceptibles de
nuire à la qualité des produits finis.

Les méthodes de conditionnement pratiquées actuellement sont
pour la plupart empiriques et leur efficacité dépend largement
de l'habileté et de l'expérience de l'opérateur.

On connaît en particulier une méthode selon laquelle on écrique une zone,    au moyen d'un chalumeau, le long de l'axe longitudinal de la face supérieure de la brame, après refroidissement de celle-ci. La zone écriquée    présente généralement une
profondeur ne dépassant pas 5 mm et une largeur de 50 à 60 mm.
Lorsque la flamme du chalumeau rencontre un défaut, elle subit
une brève modification de forme et d'intensité lumineuse, que
l'opérateur doit interpréter pour apprécier la nature et la gravité du défaut.

Dans le cas de certains aciers de qualité supérieure, on procède  quelquefois à l'écriquage de deux zones supplémentaires au
voisinage des bords longitudinaux de la brame, parallèlement à
la zone écriquée axiale.

Dans tous les cas, la qualité de la surface tout entière est alors appréciée par extrapolation des résultats fournis par la ou les zones qui sont écriquées dans la face supérieure de la brame.

Cette méthode est très lente et son caractère empirique ne permet pas d'obtenir des résultats objectifs et reproductibles. En outre, elle ne concerne effectivement qu'une faible partie de la surface du produit et elle ne donne dès lors aucune information réelle et fiable couvrant la totalité de la surface.

On connaît également un appareil d'écriquage par points, utilisable en particulier lorsqu'il s'agit d'éliminer de gros défauts. Un châssis portant un certain nombre de chalumeaux se déplace automatiquement devant la brame à traiter et les chalumeaux nettoient la surface aux endroits dont les coordonnées ont été communiquées à l'organe de commande de l'appareil.

L'utilisation de ces appareils implique cependant que l'on ait au préalable localisé les défauts à éliminer. En outre, ils ne permettent pas d'inspecter la zone traitée et l'opération de nettoyage risque donc de se dérouler de façon aveugle.

Une méthode plus récente et applicable à des produits se trouvant à une température de 800°C à 1000°C, consiste à écriquer une zone, comme rappelé plus haut, et à reporter l'image de la flamme du chalumeau à une certaine distance du produit, à l'aide d'une caméra et d'un écran de télévision. L'opérateur peut ainsi observer l'image de la flamme sans être exposé à la forte chaleur dégagée par le produit à haute température; il relève les coordonnées, c'est-à-dire essentiellement la position dans cette zone des défauts relevés par les variations de forme et de luminosité de la flamme. Le produit chaud est ensuite envoyé au chantier de conditionnement, où un chalumeau automatique élimine les défauts aux points dont les coordonnées
ont été communiquées à son organe de commande.

Cette méthode présente les inconvénients inhérents à la méthode
d'écriquage rappelée plus haut, à savoir lenteur, empirisme,
absence de fiabilité et de reproductibilité des observations,
exiguïté de la partie de surface observée. En outre, elle entraîne la séparation des opérations de détection et d'élimination des défauts; par conséquent, elle exige une surface de sol
plus importante et une durée d'opération accrue, qui se répercutent défavorablement sur le coût de l'opération.

Par ailleurs, les méthodes de conditionnement actuelles sont,
par essence, discontinues car elles nécessitent dans la plupart
des cas, le transfert du produit dans un atelier approprié, appelé atelier de conditionnement, distinct de la halle de coulée.

Ce caractère discontinu constitue un inconvénient d'autant plus
sérieux qu'une proportion croissante de l'acier produit est
coulé en continu.

La présente invention a pour objet un procédé permettant de remédier aux divers inconvénients qui viennent d'être rappelés.

En particulier, le procédé qui fait l'objet de la présente invention permet de regrouper en un seul endroit les différentes
opérations de détection des défauts, d'élimination de ces défauts et de contrôle de la surface que comprend le conditionnement d'un produit métallique, tel qu'une brame en acier coulée en continu.

Un autre but de l'invention est de fournir une méthode de conditionnement qui soit applicable à des produits métalliques en
mouvement, par exemple aussi près que possible de la sortie de l'installation de formation de ce produit.

A cet effet, le procédé de conditionnement d'un produit métallique qui fait l'objet de la présente invention, dans lequel on détecte les défauts superficiels et/ou sous-cutanés du dit produit et on élimine les dits défauts par un dispositif connu en soi, procédant de préférence par écriquage au chalumeau et/ou par meulage, est essentiellement caractérisé en ce que, de préférence sur un produit en mouvement à la sortie d'une installation de coulée continue, l'on réalise par un système automatique, le déplacement d'un moyen de détection devant au moins une face du dit produit, en ce que l'on détecte les défauts présents dans la dite face, en ce que l'on relève les données traduisant la localisation et/ou la gravité des défauts détectés, et on les introduit dans un calculateur, en ce que l'on utilise le dit calculateur pour la commande d'au moins un système automatique assurant le positionnement et l'intervention d'un dispositif d'élimination des défauts, d'au moins un système automatique équipé d'un moyen de contrôle de l'élimination du dit défaut et d'au moins un système automatique équipé d'un moyen de nettoyage de la surface du dit produit.

Selon une modalité intéressante de mise en oeuvre, on répète automatiquement l'opération d'élimination d'un défaut, lorsque le contrôle subséquent révèle que le défaut n'avait pas été éliminé entièrement lors de la première opération.

Si le défaut est encore visible à une profondeur d'environ 5 mm, l'opération d'élimination du défaut est interrompue et le tronçon défectueux du produit est déclassé.

Selon l'invention, il est particulièrement intéressant d'appliquer le procédé en ligne, sur un produit métallique en mouvement.

Selon une variante intéressante du procédé de l'invention, on déplace la flamme d'un chalumeau le long de la surface à conditionner, on analyse l'image de la dite flamme par un moyen connu en soi pour détecter les variations de ses caractéristiques dues à la présence de défauts, on relève, de l'analyse des images, les données traduisant le degré de gravité, ainsi que la localisation des dits défauts, on transmet ces données à un calculateur et on commande, au moyen du dit calculateur et à partir des dites données, l'intervention des sytèmes automatiques décrits plus haut et assurant l'élimination des défauts, ainsi que le contrôle et le nettoyage de la surface du produit.

A cet égard, il a été trouvé particulièrement intéressant d'analyser les dites images en détectant les variations d'intensité lumineuse de la flamme par rapport à un niveau de référence correspondant à l'absence de défauts.

Il s'est en particulier avéré intéressant, dans cette variante, d'utiliser, pour l'élimination des défauts, le chalumeau servant à la détection de ces défauts. Dans ce cas, on interrompt le déplacement du dit chalumeau aux points où l'analyse d'image fait apparaître, entre l'image instantanée et l'image de référence, un écart supérieur à une valeur prédéterminée, l'interruption se prolongeant aussi longtemps que le dit écart reste supérieur à la dite valeur prédéterminée.

De façon préférentielle, on pratique la détection des défauts du produit en effectuant des passes successives, de préférence transversales, notamment en un mouvement de va-et-vient par rapport à sa surface.

Selon l'invention, on peut pratiquer la détection des défauts
soit en scrutant l'intégralité de la surface à conditionner,
soit en ne scrutant qu'une partie de cette surface et en extrapolant les résultats de cette scrutation partielle à l'ensemble
de la surface à conditionner au moyen d'un algorithme tiré de
la pratique industrielle.

Selon l'invention, il s'est avéré intéressant de détecter et
d'éliminer les défauts sur au moins deux faces du dit produit,
ces opérations pouvant se dérouler simultanément ou non sur les
diverses faces du produit.

Selon une modalité particulièrement intéressante de mise en
oeuvre de l'invention, au moins un des dits systèmes automatiques est un robot ou un automate programmable.

En ce qui concerne les opérations de détection et d'élimination
des défauts, ainsi que de contrôle et de nettoyage de la surface du produit, la présente invention fait appel à des moyens
connus.

A titre d'exemple, on peut utiliser :

- un système électro-optique, tel qu'une caméra de télévision
  pour détecter les défauts superficiels;
- un appareil à courants de Foucault pour détecter les défauts
  sous-cutanés;
- une meuleuse ou un chalumeau à flamme pour éliminer les
  défauts;
- une caméra de télévision avec moniteur pour contrôler la
  surface;
- un racloir pour le nettoyage de la surface.

0117248

Le procédé de l'invention permet d'inspecter et de conditionner l'intégralité d'une ou de plusieurs faces du produit métallique. Il n'est donc pas sujet à l'important risque d'erreur
que présentent les procédés usuels par extrapolation à partir
d'un contrôle localisé.

En outre, il est basé sur la détection objective, et de préférence automatique, et dès lors reproductible, de la localisation et de la gravité des défauts. Son efficacité ne dépend
donc plus de l'habileté ou de l'expérience de l'opérateur.

Enfin, il peut être mis en oeuvre en continu, simultanément ou
non sur une ou plusieurs faces du produit métallique. Il permet donc d'éviter de nombreuses manipulations, il n'exige pas
d'atelier spécial de conditionnement et réduit très sensiblement le temps nécessaire à ces opérations.

Dans le cas particulier de brames de coulée continue, le procédé de l'invention peut être mis en oeuvre dès la sortie de
la machine de coulée, ce qui permet d'obtenir très rapidement
des informations fiables sur la qualité de la brame. En particulier, il permet de déterminer les tronçons de brame qui devront être déclassés ou mis au rebut lors de l'oxycoupage.

Revendications.

1. Procédé de conditionnement d'un produit métallique, dans lequel on détecte les défauts superficiels et/ou sous-cutanés du dit produit et dans lequel on élimine les dits défauts par un dispositif connu en soi, procédant de préférence par écriquage au chalumeau et/ou par meulage, caractérisé en ce que, de préférence sur un produit en mouvement à la sortie d'une installation de coulée continue, l'on réalise par un système automatique, le déplacement d'un appareil de détection devant au moins une face du dit produit, en ce que l'on détecte les défauts présents dans la dite face, en ce que l'on relève les données traduisant la localisation et/ou la gravité des défauts détectés, et on les introduit dans un calculateur, en ce que l'on utilise le dit calculateur pour la commande de :

a) au moins un premier système automatique assurant le positionnement et l'intervention d'un dispositif d'élimination des défauts,

b) au moins un deuxième système automatique équipé d'un moyen de contrôle de l'élimination du dit défaut,

c) au moins un troisième système automatique équipé d'au moins un moyen de nettoyage de la surface du dit produit.

2. Procédé suivant la revendication 1, caractérisé en ce que l'on détecte les dits défauts en déplaçant la flamme d'un chalumeau le long de la surface du produit et en analysant l'image de la dite flamme pour détecter les variations de ses caractéristiques dues à la présence des défauts, en ce que, de l'analyse des images, on relève les données traduisant le degré de gravité, ainsi que la localisation des dits défauts, et en ce que l'on introduit les dites données dans le dit calculateur.

3. Procédé suivant la revendication 2, caractérisé en ce que l'analyse des dites images consiste à détecter les variations d'intensité lumineuse de la flamme par rapport à un niveau de référence correspondant à l'absence de défaut.

4. Procédé suivant les revendications 2 et 3, caractérisé en ce que l'on interrompt le déplacement du dit chalumeau aux points où l'analyse d'image fait apparaître, entre l'image instantanée et l'image de référence, un écart supérieur à une valeur prédéterminée, en ce que l'on reprend le déplacement du dit chalumeau, lorsque le dit écart est redevenu inférieur à la dite valeur prédéterminée, et en ce que l'on introduit les coordonnées des dits points dans un calculateur au moyen duquel on commande les dits deuxième et troisième systèmes automatiques.

5. Procédé suivant la revendication 1 caractérisé en outre en ce que l'on utilise pour au moins un des dits systèmes automatiques, un robot ou un automate programmable.

6. Procédé suivant la revendication 1, caractérisé en outre en ce que l'on pratique la détection des dits défauts, en effectuant une scrutation d'au moins une partie de la surface à conditionner et en extrapolant les résultats de cette scrutation à la partie restante non scrutée de la dite surface.

# RAPPORT DE RECHERCHE EUROPEENNE

EP 84 87 0008

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y,A | EP-A-0 030 976 (SUMITOMO METAL INDUSTRIES) <br> * Revendications 1-4 * | 1,4-6 | B 24 B 27/00 <br> B 23 K 7/06 <br> B 23 P 9/00 <br> B 21 B 45/00 <br> B 21 C 43/00 |
| Y | DE-A-2 447 730 (SHIMADZU SEISAKUSHO) <br> * Revendications 1-4 * | 1,5,6 | |
| Y,A | DE-A-2 529 154 (NIPPON STEEL) <br> * Revendications 1-7 * | 1,4-6 | |
| A | DE-B-2 843 269 (STAHLWERKE PEINE) <br> * Revendications 1, 2 * | 1,5,6 | |
| A | DE-B-2 606 853 (F. KRUPP HÜTTENWERKE et al.) <br> * Revendication 1 * | 1 | **DOMAINES TECHNIQUES RECHERCHES (Int. Cl. ³)** |
| A | US-A-3 953 943 (NAKAOKA) <br> * Revendications 1-4 * | 1,6 | B 24 B 27/00 <br> B 23 K 7/00 <br> B 23 P 9/00 <br> B 21 B 45/00 <br> B 21 C 43/00 |

Le présent rapport de recherche a été établi pour toutes les revendications

| Lieu de la recherche <br> BERLIN | Date d'achèvement de la recherche <br> 02-04-1984 | Examinateur <br> GOLDSCHMIDT G |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

\& : membre de la même famille, document correspondant

OEB-Form 1503. 03.82